# EUROPÄISCHE PATENTANMELDUNG

(11) **EP 0 928 562 A1**
(43) Veröffentlichungstag der Anmeldung: **14.07.1999**
(21) Anmeldenummer: 98124774.5
(22) Anmeldetag: 29.12.1998
(51) Int. Cl.: A23G 1/26, A23G 7/00, A23G 1/21

(54) **Vorrichtung zur Herstellung von Schokoladenhülsen**

(30) Priorität: 30.12.1997 DE 19758169
(71) Anmelder: Gebr. Bindler Maschinenfabrik GmbH & Co. KG, D-51702 Bergneustadt (DE)
(72) Erfinder: Bindler, Uwe, 51702 Bergneustadt (DE)
(74) Vertreter: Cohausz & Florack

(57) **Zusammenfassung**

Die Erfindung betrifft eine Vorrichtung zur Herstellung eines Schokoladenartikels, insbesondere einer Hülse für Schokoladenhohlkörper, mit einer Fördereinrichtung (1) zum Transport von Formen (2), die jeweils mindestens eine Alveole zur Eindosierung von flüssiger Schokoladenmasse aufweisen, wobei jeder Form mindestens ein Stempelelement zugeordnet ist, mittels der der mindestens einen Alveole ein gekühltes Stempelelement zum Eintauchen in noch flüssige Schokoladenmasse zuführbar ist. Die Aufgabe, eine Vorrichtung zur Durchführung des bekannten Kaltstempelverfahrens zu schaffen, die fertigungstechnisch optimiert ist, wird dadurch gelöst, daß die Fördereinrichtung (1) eine erste Sammelstrecke (1a) aus der die Formen einzeln ausschleusbar und eine zweite Sammelstrecke (1c) zur Aufnahme der ausgeschleusten Formen aufweist, wobei jede Form (2) gemeinsam mit dem ihr zugeordneten mindestens einen Stempelelement von der ersten (1a) zur zweiten (1c) Sammelstrecke bewegbar ist.

## Beschreibung

Die Erfindung betrifft eine Vorrichtung zur Herstellung eines Schokoladenartikels, insbesondere einer Hülse für Schokoladenhohlkörper, mit einer Fördereinrichtung zum Transport von Formen, die jeweils mindestens eine Alveole zur Eindosierung von flüssiger Schokoladenmasse aufweisen, wobei jeder Form mindestens ein Stempelelement zugeordnet ist, mittels der der mindestens einen Alveole ein gekühltes Stempelelement zum Eintauchen in noch flüssige Schokoladenmasse zuführbar ist.

Aus dem deutschen Gebrauchsmuster G 94 19 672 ist eine Vorrichtung der eingangs genannten Art bekannt.

Aus der GB-PS 207974 ist es bekannt, einen gekühlten Stempel vorzusehen, welcher in die Schokoladenmasse einer Schokoladenform eintaucht, wobei ein Schokoladenhohlkörper gewünschter Dicke entsteht. Eine andere Vorrichtung zur Herstellung von Schokoladenartikeln ist aus der EP 0 589 820 bekannt, bei der der Stempel, der in die Schokoladenmasse eintaucht, auf eine Temperatur von mindestens 0°C heruntergekühlt wird.

Der Erfindung liegt die Aufgabe zugrunde, eine Vorrichtung zur Herstellung eines Schokoladenartikels der eingangs genannten Art zu schaffen, die fertigungstechnisch optimiert ist.

Diese Aufgabe wird erfindungsgemäß dadurch gelöst, daß die Fördereinrichtung eine erste Sammelstrecke aus der die Formen einzeln ausschleusbar und eine zweite Sammelstrecke (1c) zur Aufnahme der ausgeschleusten Formen aufweist, wobei jede Form (2) gemeinsam mit dem ihr zugeordneten mindestens einen Stempelelement von der ersten zur zweiten Sammelstrecke bewegbar ist.

Die Erfindung zeichnet sich dadurch aus, daß die seriell in der Fördervorrichtung transportierten Formen auf der ersten Sammelstrecke gesammelt, von dort ausgeschleust, von der zweiten Sammelstrecke aufgenommen und dort in der dann gewünschten Reihenfolge seriell weiter transportiert werden können. Da Stempelelement und Form zwischen den Sammelstrecken gemeinsam bewegt werden, kann die verbleibende Zeit beim Übergang von der ersten Sammelstrecke zur zweiten Sammelstrecke zum Verfestigen der Schokoladenmasse verwendet werden. Anschließend beginnt der Fördervorgang erneut.

Die Formen werden dabei vorzugsweise durch eine klimatisierte Trockenluftkammer hindurchbewegt, und zwar gemeinsam mit der Stempeleinheit, d.h. sie verbleiben in der Trockenluftkammer solange bis die Hülsen sich ausreichend verfestigt haben.

Weitere bevorzugte Ausführungsformen gehen aus den nachfolgenden Unteransprüchen hervor.

Die Erfindung wird im folgenden anhand einer Zeichnung näher erläutert:

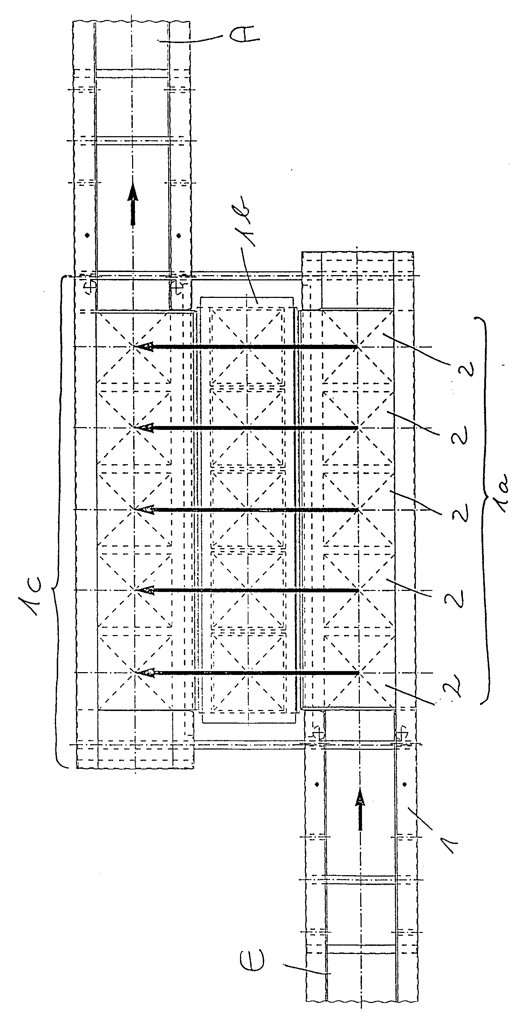

Dabei zeigt die einzige Figur die Draufsicht auf eine Fördervorrichtung 1 für Gießformen 2 zur Herstellung von Schokoladenhülsen.

Die Fördervorrichtung 1 besteht dabei aus einem Formeneinlaufbereich E, einem Formenauslaufbereich A und einem im Detail dargestellten Zwischenbereich. Der Zwischenbereich besteht aus einer ersten Sammelstrecke 1a, einer zweiten Sammelstrecke 1c und einer dazwischen angeordneten Verweilstrecke 1b. Die Verweilstrecke 1b ist als klimatisierte Trockenluftkammer ausgebildet.

Der Transport der einzelnen Formen 2 erfolgt zunächst vom Einlauf E kommend in Richtung des unteren waagerechten Pfeiles, bis die Formen 2 die in der Figur unten gestrichelt dargestellte Position erreicht haben. Die dargestellten fünf Formen 2 werden dabei durch Schieben hintereinander gefördert, bis sie die Position in der Sammelstrecke 1a erreicht haben.

Jede Form 2 wird dann anschließend in Richtung der vertikalen Pfeile durch die Trockenkammer 1b hindurchbewegt. Die einzelnen Formen 2 gelangen dann in den zweiten Teilabschnitt (1c), der als Sammelstrecke für die Formen ausgebildet ist. Von dort werden die Formen dann wieder seriell durch Schieben hintereinander in Richtung des Auslaufs A gefördert.

Jede Form 2 weist auf ihrer Oberseite nicht dargestellte Alveolen auf, welche durch Mulden gebildet werden, in die durch eine geeignete Dosiervorrichtung eine bestimmte Menge flüssiger, verarbeitungsbereiter Schokoladenmasse eindosiert wird. Nach Eindosierung der Schokoladenmasse in die Alveolen wird die Form nun so in bezug auf ein Stempelelement (ebenfalls nicht dargestellt) bewegt, daß der Stempel in die Form abgesenkt wird und nach einer bestimmten Verweildauer wieder hochgehoben wird. Der Stempel ist dabei auf eine geeignete Temperatur unterhalb der Raumtemperatur abgekühlt, um ein schnelleres Verfestigen der Schokoladenmasse in der Alveole zu erreichen.

Während des Durchganges durch die Verweilstrecke (Trockenluftkamer) 1b wird der Stempel gemeinsam mit der Form gefördert.

## Patentansprüche

1. Vorrichtung zur Herstellung eines Schokoladenartikels, insbesondere einer Hülse für Schokoladenhohlkörper, mit einer Fördereinrichtung (1) zum Transport von Formen (2), die jeweils mindestens eine Alveole zur Eindosierung von flüssiger Schokoladenmasse aufweisen, wobei jeder Form mindestens ein Stempelelement zugeordnet ist, mittels der der mindestens einen Alveole ein gekühltes Stempelelement zum Eintauchen in noch flüssige Schokoladenmasse zuführbar ist,
**dadurch gekennzeichnet, daß** die Fördereinrichtung (1) eine erste Sammelstrecke (1a) aus der die Formen einzeln ausschleusbar und eine zweite Sammelstrecke (1c) zur Aufnahme der ausgeschleusten Formen aufweist, wobei jede Form (2) gemeinsam mit dem ihr zugeordneten mindestens einen Stempelelement von der ersten (1a) zur zweiten (1c) Sammelstrecke bewegbar ist.

2. Vorrichtung nach Anspruch 1,
**dadurch gekennzeichnet, daß** zwischen der ersten und der zweiten Sammelstrecke (1a, 1c) eine Verweilstrecke (1b) angeordnet ist, wobei während der Aufenthaltsdauer der Form (2) in der Verweilstrecke (1b) einer Verfestigung des Schokoladenartikels eintritt.

3. Vorrichtung nach Anspruch 1 oder 2,
**dadurch gekennzeichnet, daß** die Verweilstrecke (1b) eine, insbesondere klimatisierte, Trockenluftkammer ist.

4. Vorrichtung nach einem der vorhergehenden Ansprüche 1 bis 3,
**dadurch gekennzeichnet, daß** mehrere Formen (2) parallel durch die Trockenluftkammer (1b) bewegbar sind.

5. Vorrichtung nach einem der vorhergehenden Ansprüche 1 bis 4,
**dadurch gekennzeichnet, daß** die Form quadratisch ist.

6. Vorrichtung nach einem der vorhergehenden Ansprüche 1 bis 5,
**dadurch gekennzeichnet, daß** das Fördern der Formen (2) durch serielles Schieben erfolgt.
